# FASCICULE DE BREVET EUROPEEN

(11) **EP 3 154 817 B1**
(45) Date de publication et mention de la délivrance du brevet: **31.07.2019**
(21) Numéro de dépôt: 15744271.6
(22) Date de dépôt: 12.06.2015
(51) Int. Cl.: B60N 2/24, B60N 2/42, B60N 2/30, F41H 7/00, B60R 22/12, B60R 22/26, B60N 2/90

(54) **DISPOSITIF DE DÉPOSE/RÉPOSE RAPIDE D'UN DOSSIER DE SIÈGE DE VÉHICULE, ET ENSEMBLE SIÈGE LE COMPRENANT**
VORRICHTUNG ZUR SCHNELLEN ENTFERNUNG/ERSETZUNG EINER FAHRZEUGSITZRÜCKENLEHNE UND SITZANORDNUNG MIT EINER SOLCHEN VORRICHTUNG
DEVICE FOR RAPID REMOVAL/REPLACEMENT OF A VEHICLE SEAT BACK, AND SEAT ASSEMBLY COMPRISING SAME

(30) Priorité: 12.06.2014 FR 1401335
(43) Date de publication de la demande: 19.04.2017
(73) Titulaire: NEXTER Systems, 42300 Roanne (FR)
(72) Inventeur: JACQUEMONT, Jacky, 18023 Bourges (FR); POIRMEUR, Xavier, 18023 Bourges (FR)
(74) Mandataire: Cabinet Chaillot
(86) Numéro de dépôt international: PCT/FR2015/051561
(87) Numéro de publication internationale: WO 2015/189528

(56) Documents cités:
- EP-A2- 2 103 478
- EP-A2- 2 127 940
- US-A1- 2013 152 775
- US-A1- 2013 169 020

## Description

La présente invention concerne le domaine des sièges pour véhicules et notamment des sièges pour véhicules blindés, et porte, en particulier, sur un dispositif de dépose/repose rapide d'un dossier de siège, et éventuellement également d'un harnais, et sur un ensemble siège comprenant ce dispositif.

Les exigences réglementaires et de tenue face aux menaces EEI (Engins Explosifs Improvisés) (latérales et en dessous de plancher) ont nécessité d'ajouter des ceintures de type harnais aux sièges de véhicules blindés. Par ailleurs, les véhicules blindés doivent comporter des sièges qui assurent une assise sécurisée mais qui en même temps occupent un volume réduit dans l'habitacle.

Il est connu d'équiper les véhicules blindés de sièges dont le dossier est repliable.

Cependant, de tels sièges présentent un encombrement trop important et ne permettent pas d'avoir un accès facile aux zones de l'habitacle situées derrière le dossier du siège.

Afin de faciliter l'accès aux équipements placés derrière le dossier du siège, il a été proposé dans le brevet européen EP 2 208 635 B1 un siège à dossier souple démontable du plafond du véhicule.

Ce siège comprend un dossier souple fixé entre une assise solidaire de la structure du véhicule et un profilé solidarisé à demeure à la structure, au voisinage d'un plafond du véhicule, le dossier étant fixé d'une façon détachable au niveau du profilé par des crochets reliés au dossier par des premières sangles de réglage de la tension du dossier.

Est en outre prévu un harnais comportant une sangle ventrale et deux sangles d'épaule. Chaque sangle d'épaule traverse, en passant par un orifice du dossier, un passant fixe positionné en arrière du dossier, l'extrémité de chaque sangle d'épaule étant rendue solidaire de la structure du véhicule. De plus, les deux passants fixes sont solidaires de secondes sangles souples de longueur réglable fixées, en bas, à la structure du véhicule et, en haut, de manière détachable audit profilé par des mousquetons.

Ainsi, pour déposer le dossier de siège, il est nécessaire au préalable de détendre lesdites premières et secondes sangles, puis de les décrocher du profilé. On comprend que la repose nécessite alors la remise en tension de chacune des sangles.

Par conséquent, bien qu'un tel siège permette de détacher aisément le dossier, la dépose et le repose du dossier impliquent d'agir sur la tension de chacune des sangles.

La demande de brevet européen EP 2 127 940 A2 est un autre exemple de siège dont le dossier souple est suspendu au plafond par des sangles, dont la tension est réglable, et maintenu tendu par la mise en tension desdites sangles, mais dont la repose nécessite de détendre et de retendre les sangles. En effet, lesdites sangles sont accrochées au dossier par l'intermédiaire de boucles d'accrochage du type à languette. Eviter l'action sur la tension des sangles supposerait que l'utilisateur parvienne à tendre directement lui-même le dossier jusqu'à une tension correspondant à celle du dossier tendu. A l'évidence, même en supposant que l'utilisateur parvienne à tendre suffisamment le dossier, ce qui ne sera en pratique pas le cas, qu'il ait à exercer un tel effort va à l'encontre de l'objectif de dépose/repose aisé et rapide du dossier.

On mentionne ici que suspendre un siège à un plafond par des sangles est connu, avec le cas échéant des moyens dédiés à l'absorption des chocs, par exemple des demandes de brevets EP 2 103 478 A2, US 2013/152775 A1 et US 2013/169020 A1.

La présente invention vise à résoudre les problèmes mentionnés ci-dessus et ainsi à proposer une solution grâce à laquelle le dossier et le harnais associé sont déposés et reposés rapidement et aisément, sans agir sur la tension des différentes sangles.

Selon la présente invention, une telle solution consiste à interposer entre d'une part le plafond et, d'autre part, le dossier et le harnais, un dispositif comprenant une structure intermédiaire de suspension, à laquelle les différentes sangles peuvent être reliées, qui peut être suspendue à une structure fixe alors que le dossier et le harnais n'exercent aucune tension sur celle-ci, et qui peut ensuite être déplacée par un mouvement ascendant jusqu'à une position dans laquelle le siège peut être utilisé et verrouillée dans cette position.

Cette solution peut être appliquée à la dépose/repose du seul dossier d'un siège, dans le cas où aucun harnais n'est prévu.

La présente invention a donc pour objet un dispositif adapté pour une dépose/repose rapide d'un dossier d'un siège de véhicule, le siège comprenant une assise, solidaire d'une structure du véhicule, et un dossier qui est fixé, en position d'utilisation du siège, et par l'intermédiaire d'au moins une première sangle, entre l'assise et un ou plusieurs premiers points d'attache hauts à un plafond du véhicule, ladite ou lesdites premières sangles étant réglables en tension et étant, en position d'utilisation du siège, tendues de façon à maintenir en position le dossier, dispositif caractérisé par le fait qu'il comprend une structure intermédiaire de suspension, munie de moyens de liaison à ladite ou auxdites premières sangles, et une structure fixe qui est adaptée pour être solidaire du plafond du véhicule et forme ledit ou lesdits premiers points d'attache hauts, la structure fixe comprenant à cet effet :
- des moyens de retenue pour relier de manière amovible la structure intermédiaire de suspension à la structure fixe et supporter la structure intermédiaire de suspension en position d'utilisation du siège, position dans laquelle la structure intermédiaire de suspension a été amenée avec un mouvement vers le plafond de façon à placer la structure intermédiaire de suspension sous tension par la ou les premières sangles ; et
- des moyens de verrouillage pour, dans une première position, verrouiller la structure intermédiaire de suspension dans la position d'utilisation du siège, et pour, dans une seconde position, libérer la structure intermédiaire de suspension d'une manière telle que cette dernière est déplacée à l'opposé du plafond de façon à relâcher la tension exercée par la ou les premières sangles sur la structure intermédiaire de suspension et permettre ainsi à la structure intermédiaire de suspension d'être désengagée des moyens de retenue, ces derniers étant configurés pour supporter la structure intermédiaire de suspension au cours dudit déplacement à l'opposé du plafond,
ce par quoi le dossier peut ainsi être déposé ou reposé sans action sur le réglage en tension de ladite ou desdites premières sangles.

Dans le cas où sont prévues plusieurs premières sangles, la configuration ci-dessus de la structure intermédiaire de suspension et de la structure fixe permet une mise en tension des premières sangles, et donc du dossier, plus aisée puisque seule la structure intermédiaire de suspension a besoin d'être déplacée vers le haut, et non chaque sangle isolément comme dans la demande de brevet EP 2 127 940 A2. L'opération peut donc se faire d'une seule main.

De préférence, le dispositif est destiné à la dépose/repose rapide d'un dossier d'un siège de véhicule et d'un harnais équipant le siège, le harnais comprenant au moins deux sangles d'épaule coopérant chacune avec une seconde sangle s'étendant entre un point d'attache bas solidaire de la structure du véhicule ou de l'assise de siège et, en position d'utilisation du siège, un second point d'attache haut au plafond du véhicule, ladite ou lesdites secondes sangles étant réglables en tension et étant, en position d'utilisation du siège, tendues de façon à permettre un maintien de l'occupant du siège en appui contre le dossier par les deux sangles d'épaule, dispositif caractérisé par le fait que la structure intermédiaire de suspension est également munie de moyens de liaison auxdites secondes sangles.

Selon un premier mode de réalisation, les moyens de retenue sont formés par des crochets fixes dont les ouvertures ont des fonds qui suivent un même cylindre fictif et la structure intermédiaire de suspension comprend au moins une barre cylindrique apte à être reçue dans les crochets de manière à pouvoir tourner autour de l'axe longitudinal de l'au moins une barre, la structure intermédiaire de suspension étant ainsi apte à pivoter vers le haut ou vers le bas autour de l'axe de rotation de l'au moins une barre.

La structure intermédiaire de suspension est ainsi apte à être suspendue à la structure fixe par engagement de l'au moins une barre dans les crochets et à être ensuite amenée à la position d'utilisation de siège par pivotement de la structure intermédiaire de suspension vers le haut jusqu'à la position d'utilisation du siège, le pivotement vers le haut ayant pour effet de mettre sous tension la structure intermédiaire de suspension tandis que le pivotement de la structure intermédiaire de suspension vers le bas, autorisé par les moyens de verrouillage lorsqu'ils sont dans leur seconde position, permet de relâcher la tension exercée par les premières et le cas échéant secondes sangles.

De préférence, le centre d'inertie de la structure intermédiaire de suspension est décalé, vis-à-vis de l'axe de rotation de l'au moins une barre, côté assise par rapport au plan du dossier dans la position d'utilisation du siège.

La structure intermédiaire de suspension peut comprendre deux poignées reliées par une barre centrale de liaison et portant chacune des moyens de fixation d'une première sangle et, le cas échant, d'une seconde sangle, et une barre cylindrique apte à être reçue dans l'un des crochets fixes.

Selon un second mode de réalisation, la structure fixe comprend un support fixe solidaire du plafond du véhicule, les moyens de retenue sont formés par des crochets mobiles reliées au support fixe de manière à pouvoir pivoter autour d'un axe de pivotement horizontal, les ouvertures des crochets ayant des fonds qui suivent un même cylindre fictif, et la structure intermédiaire de suspension comprend au moins une barre cylindrique apte à être reçue dans les crochets, la structure intermédiaire de suspension étant ainsi apte, après engagement de l'au moins une barre dans les crochets, à être déplacée jusqu'à la position d'utilisation du siège par pivotement vers le haut ou vers le bas des crochets mobiles.

De préférence, le centre d'inertie de l'ensemble formé par les crochets mobiles et la structure intermédiaire de suspension lorsque l'au moins une barre est engagée dans les crochets mobiles, est décalé, vis-à-vis de l'axe de pivotement des crochets, côté assise par rapport au plan du dossier dans la position d'utilisation du siège.

De préférence, les moyens de verrouillage comprennent un organe de verrouillage mobile entre lesdites première et seconde positions des moyens de verrouillage et des moyens de sollicitation élastique de l'organe de verrouillage vers la première position, et la structure intermédiaire de suspension porte un organe de coopération agencé pour déplacer l'organe de verrouillage de ladite première position à ladite seconde position lorsque la structure intermédiaire de suspension arrive à la position d'utilisation du siège par un mouvement vers le plafond.

Les moyens de verrouillage peuvent avantageusement comprendre une poignée de commande de déverrouillage actionnable manuellement pour déplacer l'organe de verrouillage de la première position à la seconde position.

Dans le premier mode de réalisation l'organe de coopération peut consister en un doigt de verrouillage s'étendant à partir de la barre centrale de liaison et la structure fixe présente une échancrure apte à recevoir le doigt de verrouillage lorsque la structure intermédiaire de suspension est dans la position d'utilisation du siège, l'organe de verrouillage étant un loquet pivotant présentant une surface extérieure en biais orientée de telle sorte que le doigt de verrouillage fait pivoter le loquet vers la seconde position lorsqu'il appuie sur la surface en biais à l'arrivée de la structure intermédiaire de suspension à la position d'utilisation du siège.

Dans le second mode de réalisation, l'organe de verrouillage peut être formé par un doigt de verrouillage porté, par le support fixe, à translation dans une direction parallèle à l'axe de pivotement des crochets mobiles, et les crochets mobiles sont reliées d'un seul tenant l'un à l'autre par une partie centrale de liaison portant une patte inclinée en étant tournée vers le haut et le doigt de verrouillage, un trou traversant étant ménagé dans la patte pour le passage du doigt de verrouillage, ladite patte formant l'organe de coopération et son inclinaison étant telle que la patte déplace le doigt de verrouillage en translation vers la seconde position lorsqu'il appuie sur la patte inclinée à l'arrivée de la structure intermédiaire de suspension à la position d'utilisation du siège.

La présente invention a également pour objet un ensemble siège pour véhicule, comprenant un siège et des points d'attache du siège à un plafond du véhicule, le siège comprenant une assise, solidaire d'une structure du véhicule, et un dossier, de préférence souple, qui est fixé, en position d'utilisation du siège, et par l'intermédiaire d'au moins une première sangle, entre l'assise et un premier point d'attache haut à un plafond du véhicule, le siège étant, de préférence, équipé d'un harnais comprenant au moins deux sangles d'épaule coopérant chacune avec une seconde sangle s'étendant entre un point d'attache bas solidaire de la structure du véhicule et, en position d'utilisation du siège, un second point d'attache haut au plafond du véhicule, ladite ou lesdites premières sangles et le cas échéant ladite ou lesdites secondes sangles étant réglables en tension et étant, en position d'utilisation du siège, tendues de façon à respectivement maintenir en position le dossier et permettre un maintien de l'occupant du siège en appui contre le dossier par les deux sangles d'épaule, ensemble siège caractérisé par le fait qu'il comprend un dispositif de dépose/repose rapide tel que défini ci-dessus.

Pour mieux illustrer l'objet de la présente invention, on va en décrire ci-après deux modes de réalisation particuliers, avec référence au dessin annexé.

Sur ce dessin :
- la Figure 1 est une vue d'ensemble, en perspective, d'un siège de véhicule blindé équipé du dispositif de dépose/repose de dossier selon un premier mode de réalisation de l'invention, le dossier étant en position d'utilisation ;
- les Figures 2 et 3 sont des vues en perspective, respectivement côté avant et côté arrière, légèrement de dessus, du dispositif selon le premier mode de réalisation de l'invention, en position verrouillée ;
- la Figure 4 est une vue en perspective côté avant, légèrement de dessous, du dispositif selon le premier mode de réalisation de l'invention, en position verrouillée, la partie supérieure des différentes sangles ayant été représentée ;
- la Figure 5 est une vue en perspective de dessus, côté avant, du dispositif selon le premier mode de réalisation de l'invention, en position déverrouillée, avant le décrochage de la structure intermédiaire de suspension ;
- la Figure 6 est une vue en perspective côté avant, légèrement de dessous, de la structure fixe du dispositif selon le premier mode de réalisation de l'invention ;
- la Figure 7 est une vue d'ensemble, en perspective, d'un siège de véhicule blindé équipé du dispositif de dépose/repose de dossier selon un second mode de réalisation de l'invention, le dossier étant en position d'utilisation ;
- les Figures 8 et 9 sont des vues en perspective côté avant du dispositif selon le second mode de réalisation de l'invention, en position respectivement verrouillée et déverrouillée ; et
- la Figure 10 est une vue en perspective côté avant de la structure fixe du dispositif selon le second mode de réalisation de l'invention.

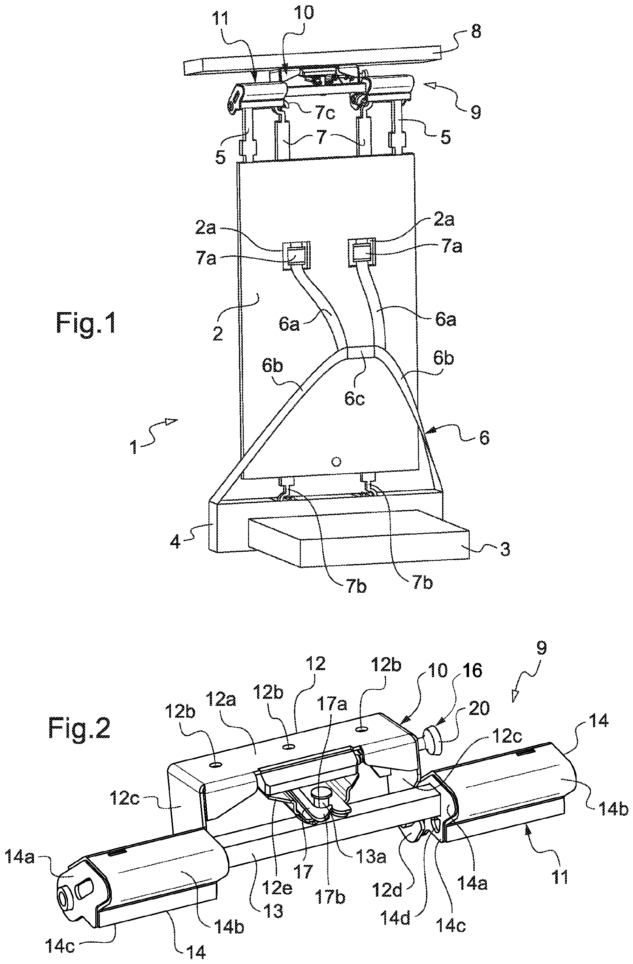

Si l'on se réfère aux Figures 1 à 10, on peut voir qu'y est représenté un dispositif de dépose/repose rapide selon des premier et second modes de réalisation de la présente invention, équipant un siège 1 qui comprend un dossier souple 2, par exemple en toile ou en matériau synthétique, et une assise 3 solidaire d'un profilé 4 lui-même solidaire de la structure du véhicule. L'assise 3 pourra être montée basculante par rapport au profilé 4.

Le dossier 2 est, en partie basse, solidaire de l'assise 3 et porte, en partie haute, deux premières sangles 5, de préférence de longueur réglable. Le dossier 2 présente deux orifices 2a, chacun pour le passage d'une sangle d'épaule 6a d'un harnais 6, les sangles d'épaule 6a venant coopérer, par l'intermédiaire de deux passants fixes 7a, avec deux secondes sangles 7, de longueur réglable, qui s'étendent du profilé 4, auquel elles sont fixées, ici de manière détachable par des crochets 7b, jusqu'au voisinage d'un plafond 8 du véhicule, seule une partie du plafond 8 étant représentée. Il serait également possible d'avoir un montage des sangles 7 de façon fixe au niveau du profilé 4. Le harnais 6 comprend aussi une sangle ventrale 6b se fermant par une attache 6c à laquelle sont également attachées les sangles d'épaule 6a.

La liaison du harnais 6 et des secondes sangles 7 repose sur le principe divulgué dans le brevet européen EP 2 208 635 B1, auquel on pourra se rapporter pour une description plus précise du harnais 6, des passants fixes 7a et des secondes sangles 7.

D'une manière générale, les modes de réalisation présentés ici diffèrent du brevet européen EP 2 208 635 B1 par le dispositif de dépose/pose rapide interposé entre, d'une part, les premières et secondes sangles 5, 7 et, d'autre part, le plafond 8.

Si l'on se réfère tout d'abord aux Figures 1 à 5, on peut voir que le dispositif de dépose/pose rapide 9 selon le premier mode de réalisation de la présente invention comprend une structure fixe 10 et une structure intermédiaire de suspension 11.

La structure fixe 10 comprend un support 12 formé par une tôle globalement en U dont l'ouverture est tournée vers le bas et dont le fond est appliqué par sa face externe 12a contre le plafond 8 et fixée à ce dernier par tout moyen approprié, tel que par vissage à travers des orifices 12b prévus à cet effet. Les deux ailes 12c de la tôle en U sont perpendiculaires au plan du dossier 2 en position d'utilisation de ce dernier. La partie inférieure de chaque aile 12c forme un crochet 12d à fond cylindrique et dont l'ouverture est tournée vers le plafond 8, ici côté assise 3 par rapport au plan du dossier 2 en position d'utilisation. Les crochets 12d forment les moyens de retenue de la structure intermédiaire de suspension 11.

Sur la face interne du fond du support 12, de manière sensiblement centrée dans la direction longitudinale du support 12, est fixée une pièce support de verrouillage 12e, également globalement en U, de façon à former un espace libre entre ladite face interne du support 12 et le fond de la pièce 12e. Une échancrure 12f, dont la fonction sera explicitée ci-après, est ménagée au centre du bord de la pièce 12e, côté crochet 12d.

La structure intermédiaire de suspension 11 comprend une barre centrale de liaison 13 dont chacune des deux extrémités est solidaire d'une poignée 14.

La barre 13, de section transversale carrée, porte, au centre dans la direction longitudinale de celle-ci, un doigt de verrouillage 13a se présentant sous la forme d'un plot cylindrique s'étendant perpendiculairement à une face de la barre 13.

Chaque poignée 14 se présente sous la forme d'une coque semi-ouverte consistant en deux ailes 14a, perpendiculaires à la direction longitudinale de la barre 13 et à l'une desquelles est fixée la barre 13, et une tôle formant partie de manoeuvre 14b s'étendant entre les deux ailes 14a, en partant pour chaque aile 14a d'un point d'un bord d'une aile 14a jusqu'à un point sur le bord opposé de ladite aile 14a de façon à former un espace intérieur auquel a accès la main d'une personne par une ouverture 14c.

Dans chaque aile 14a à laquelle est fixée la barre 13 est ménagé un trou 14d pour l'accrochage d'un crochet 7c à l'extrémité supérieure de chaque seconde sangle 7. L'extrémité supérieure de chaque première sangle 5 est également fixée dans l'espace intérieur d'une poignée 14 par liaison à une patte, comme cela sera vu dans le second mode de réalisation.

Ainsi, la structure intermédiaire de suspension 11 est solidaire du dossier 2, via les premières sangles 5, et du harnais 6, via les secondes sangles 7. L'ensemble structure intermédiaire de suspension 11, dossier 2 et harnais 6 peut être manipulé à l'aide d'au moins l'une des poignées 14.

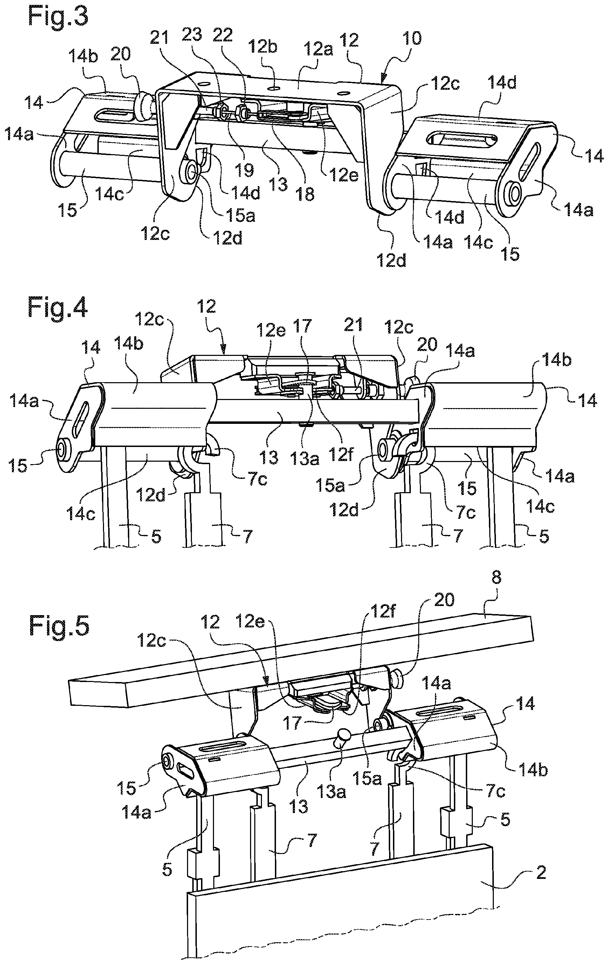

Si l'on se réfère en particulier à la Figure 3, on peut voir qu'une barre cylindrique d'accrochage 15 s'étend entre les deux ailes 14a d'une même poignée 14, côté opposé à la partie de manoeuvre 14b, une partie 15a de chaque barre 15 étant en saillie sur l'aile 14a qui est en regard de l'autre poignée 14.

Les barres 15 sont, d'une part, coaxiales l'une à l'autre et parallèles à la barre centrale 13 et, d'autre part, d'un diamètre permettant à leur partie en saillie 15a d'être reçue dans les crochets 12d de manière à pouvoir tourner autour d'un axe de rotation coaxial aux directions longitudinales des barres 15, l'écartement entre les deux ailes 14a intérieures des deux poignées 14 étant légèrement supérieur à l'écartement entre les deux ailes 12c du support 12.

En d'autres termes, lorsque la structure intermédiaire de suspension 11 est accrochée à la structure 10 par engagement des barres 15 dans les crochets 12d, la structure intermédiaire de suspension 11 peut pivoter vers le haut ou vers le bas autour d'un axe de pivotement formé par l'axe des barres 15.

Par ailleurs, la structure intermédiaire de suspension 11 est configurée et dimensionnée de telle sorte qu'elle peut être pivotée vers le haut autour dudit axe de pivotement jusqu'à une position de verrouillage dans laquelle le doigt de verrouillage 13a est reçu dans l'échancrure 12f. Cette position de verrouillage correspond à la position d'utilisation du siège 1, les sangles 5 et 7 ayant été réglées pour exercer alors une tension sur la structure intermédiaire de suspension 11.

La structure intermédiaire de suspension 11 est verrouillée dans cette position par des moyens de verrouillage 16 de type à loquet pivotant, comprenant un loquet 17, une fourche 18, une tige de commande 19 et une poignée de commande de déverrouillage 20.

Le loquet 17 s'étend le long d'un côté de la pièce 12e et est articulé, dans une partie médiane de celui-ci, sur le fond de la pièce 12e de façon à pouvoir pivoter autour d'un axe de pivotement perpendiculaire audit fond, une première extrémité du loquet 17 s'achevant en un crochet 17a dont le contour intérieur est concave et dont le contour extérieur forme une surface en biais 17b orientée vers le côté opposé de la pièce 12e, la seconde extrémité du loquet 17 étant articulée à la fourche 18 avec un axe de pivotement parallèle à l'axe de pivotement mentionné ci-dessus. Le loquet 17 est monté pivotant contre l'action d'un ressort de rappel (non représenté, par exemple un ressort de torsion monté autour de d'axe du loquet). Le ressort de rappel a pour effet de ramener le loquet 17 dans sa position de verrouillage, engagé dans l'échancrure 12f.

La tige de commande 19 traverse une aile 12c en passant par une gaine 21 solidaire du support 12 et est reliée à une extrémité à la fourche 18 et à l'autre extrémité à la poignée 20. La poignée 20 est sollicitée élastiquement, par exemple par le ressort de rappel du loquet, vers une position dans laquelle une pièce d'arrêt 22 solidaire de la tige de commande 19 est à distance d'une pièce d'arrêt 23 solidaire de la gaine 21. Dans cette position, le crochet 17a s'étend en travers de l'échancrure 12f, à l'entrée de cette dernière, de façon à s'opposer à la sortie du doigt de verrouillage 13a.

Lorsque l'on tire sur la poignée 20, à l'encontre de la sollicitation élastique, le loquet 17 est amené, sous l'action de la fourche 18 et de la tige 19, à pivoter vers l'extérieur pour que le crochet 17a soit dégagé de l'échancrure 12f. Le mouvement de sortie de la poignée 20 est limité par butée de la pièce d'arrêt 22 contre la pièce d'arrêt 23.

A l'évidence, on peut également placer le loquet 17 de l'autre côté du doigt de verrouillage 13a, pour qu'il soit dégagé de l'échancrure 12f par poussée sur la poignée 20. Dans ce cas, dans la position de verrouillage la pièce d'arrêt 22 est en butée contre la pièce d'arrêt 23, cette dernière formant ainsi un arrêt pour le pivotement du loquet 27 sous l'action de son ressort de rappel.

On souligne ici que la structure intermédiaire de suspension 11 est configurée pour que son centre de gravité soit en avant de l'axe des barres 15, autrement dit côté assise 3 par rapport au plan du dossier 2 en position d'utilisation. Cela est notamment obtenu par le fait que la barre centrale 13 se situe en avant des barres 15.

Ainsi, lorsque l'on souhaite déposer le dossier 2 et le harnais 6, il suffit de tirer sur la poignée 20 pour déverrouiller le loquet 17 qui libère le doigt de verrouillage 13a, la structure intermédiaire de suspension 11 pivotant automatiquement vers le bas sous l'action de son propre poids et de celui du dossier 2 et du harnais 6 (ainsi que de la tension initiale), ce qui a pour effet d'abaisser le dossier 2 et de relâcher la tension des sangles 5 et 7 sans agir sur leur réglage en tension. Le loquet 17 est ramené en position par sollicitation élastique et la structure intermédiaire de suspension 11 se trouve alors dans une position déverrouillée (Figure 5) dans laquelle on peut désengager les barres 15 des crochets 12d à l'aide des poignées 14 et déposer ainsi le dossier 2 et le harnais 6.

Lorsque l'on souhaite reposer le dossier 2 et le harnais 6 dans la position d'utilisation du siège 1, il suffit d'accrocher la structure intermédiaire de suspension 11 en engageant les barres 15 dans les crochets 12d, puis de la faire pivoter vers le haut jusqu'à ce que le doigt de verrouillage 13a vienne en contact avec la surface en biais 17b dont l'orientation permet au doigt de verrouillage 13a de faire pivoter le loquet 17 hors de l'échancrure 12f.

Une fois le doigt de verrouillage 13a dans l'échancrure 12f, le crochet 17a est automatiquement ramené en travers de l'échancrure 12f par son ressort de rappel et la structure intermédiaire de suspension 11 est verrouillée en position d'utilisation du siège 1, avec les sangles 5 et 7 tendues.

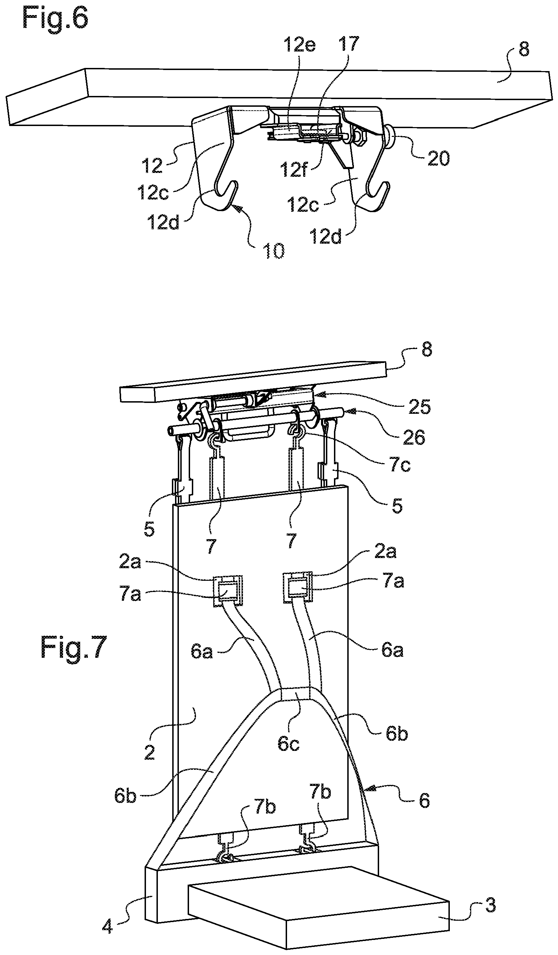

On va maintenant décrire un dispositif de dépose/repose 24 selon un second mode de réalisation de la présente invention, avec référence aux Figures 7 à 10. Le dispositif 24 est interposé avec le siège 1 tel que décrit ci-dessus et le plafond 8 du véhicule et comprend également une structure fixe 25 et une structure intermédiaire de suspension 26.

La structure intermédiaire de suspension 26 consiste en une barre cylindrique 27 portant à chaque extrémité une première patte 28 à laquelle est reliée une première sangle 5 et une seconde patte 29 à laquelle est accroché le crochet 7c d'une seconde sangle 7, la structure intermédiaire de suspension 26 formant ainsi avec le dossier 2 et le harnais 6 un ensemble manipulable d'un seul tenant.

La structure fixe 25 comprend un support fixe 30 et un support mobile d'accrochage 31.

Le support fixe 30 est formé par une tôle globalement en U dont l'ouverture est tournée vers le bas et dont le fond est appliqué par sa face externe 30a contre le plafond 8 et fixé à ce dernier par vissage à travers des orifices 30b, les deux ailes 30c étant perpendiculaires au plan du dossier 2.

Le support mobile 31 est formé par une partie centrale en bande de tôle 31a à chaque extrémité de laquelle s'étend vers le bas une aile 31b dont la partie inférieure forme un crochet 31c à fond cylindrique et dont l'ouverture est tournée vers le plafond 8, côté assise 3 par rapport au plan du dossier 2 en position d'utilisation.

Le support mobile 31 est porté à pivotement par le support 30 par l'intermédiaire d'une liaison pivot 32 entre chaque aile 30c et l'aile 31b correspondante.

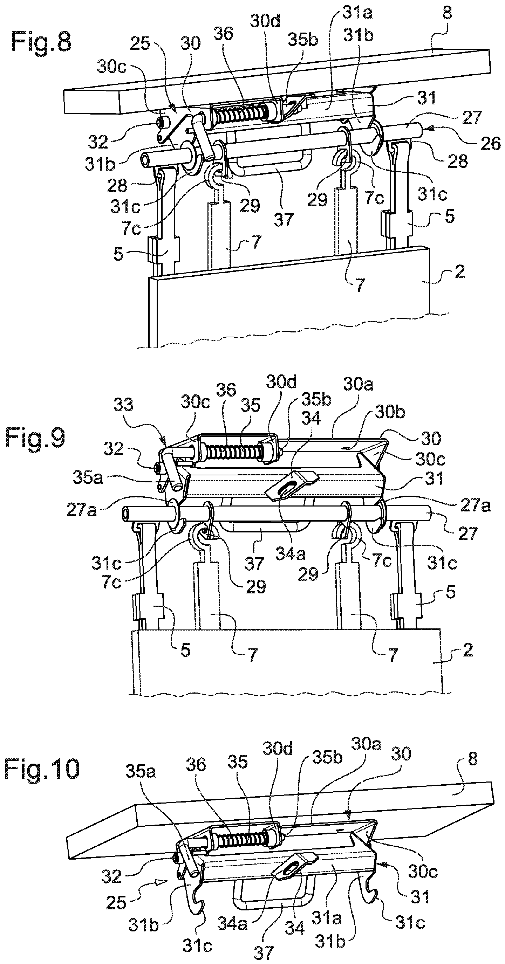

Le support mobile 31 peut ainsi être placé dans une position de verrouillage (Figures 7 et 8), dans laquelle la structure intermédiaire de suspension 26 est accrochée au support mobile 31 par engagement de la barre 27 dans les crochets 31c, avec blocage en translation par des rondelles 27a solidaires de la barre 27. Dans cette position de verrouillage, le support mobile 31 a été pivoté vers le haut jusqu'à ce que le dossier 2 et le harnais 6 soient en position d'utilisation, avec les sangles 5 et 7 tendues. Dans la position de verrouillage, la structure intermédiaire de suspension 26 est verrouillée par blocage en position du support mobile 31 au support fixe par des moyens de verrouillage 33.

Les moyens de verrouillage 33 sont formés par une patte 34 solidaire de la partie centrale 31a, côté avant, et par un doigt de verrouillage 35 porté par le support fixe 30. La patte 34 est inclinée en étant tournée vers le haut et le doigt de verrouillage 35. Un trou traversant 34a est ménagé dans la patte 34 pour le passage du doigt 35. Le doigt 35 se présente sous la forme d'une tige dont une extrémité est coudée à 90° de façon à former une poignée de manoeuvre 35a, la tige étant guidée en translation en passant à travers l'aile 30c et une patte 30d. La direction de translation est parallèle à l'axe de pivotement du support mobile 31. Un ressort 36 est monté entre l'aile 30c et la patte 30d et sollicite en permanence le doigt 35 vers la position sortie, dans laquelle l'autre extrémité 35b du doigt 35 s'étend à travers le trou traversant 34a de la patte 34, empêchant alors le support mobile 31 de pivoter vers le bas.

On souligne ici que le support mobile 31 est configuré pour que son centre de gravité soit en avant de l'axe des liaisons pivots 32.

Ainsi, lorsque l'on souhaite déposer le dossier 2 et le harnais 6, il suffit de tirer sur le doigt de verrouillage 35 vers l'extérieur à l'aide de la poignée de manoeuvre 35a, à l'encontre de l'action du ressort 36, jusqu'à désengager le doigt de verrouillage 35 de la patte 34. Le support mobile 31 pivote alors automatiquement vers le bas sous l'action de son propre poids et de celui de la structure intermédiaire de suspension 26, du dossier 2 et du harnais 6. Ceci a pour effet d'abaisser les crochets 31c, donc le dossier 2, et de relâcher la tension des sangles 5 et 7 sans agir sur leur réglage en tension. Bien que l'on ait représenté sur les Figures 9 et 10 le doigt de verrouillage 35 en position rentrée, afin d'illustrer cette position, le doigt de verrouillage 35 est ramené en position sortie par le ressort 36.

Une fois la patte 34 déverrouillée, la structure intermédiaire de suspension 26 se trouve alors dans une position déverrouillée (Figure 9) dans laquelle on peut désengager la barre 27 des crochets 31c et déposer ainsi le dossier 2 et le harnais 6.

Lorsque l'on souhaite reposer le dossier 2 et le harnais 6 dans la position d'utilisation du siège 1, il suffit d'accrocher la structure intermédiaire de suspension 26 en engageant la barre 27 dans les crochets 31c, puis de faire pivoter le support mobile 31 vers le haut, à l'aide d'une poignée 37 solidaire de la partie centrale 31a, jusqu'à ce que la patte 34 vienne en contact avec l'extrémité 35b du doigt de verrouillage 35. Du fait de l'inclinaison de la patte 34, celle-ci pousse le doigt 35 à l'encontre du ressort 36, jusqu'à ce que le doigt de verrouillage 35 puisse traverser le trou 34a sous l'action du ressort 36. Une fois arrivé à cette position, le support mobile 31 se retrouve de nouveau bloqué en position et la structure intermédiaire de suspension 26 est verrouillée en position d'utilisation du siège 1, avec les sangles 5 et 7 tendues.

Les dispositifs de dépose/repose 9 et 24 permettent donc de déposer et reposer le dossier 2 et le harnais 6 de manière aisée et rapide, sans action sur le réglage des sangles 5 et 7, avec une commande du déverrouillage d'une seule main et avec un verrouillage automatique en position d'utilisation.

Il est bien entendu que les modes de réalisation ci-dessus de la présente invention ont été donnés à titre indicatif et non limitatif et que des modifications pourront y être apportées sans que l'on s'écarte pour autant du cadre de la présente invention tel que définit par le jeu des revendications.

## Revendications

1. Dispositif (9 ; 24) adapté pour une dépose/repose rapide d'un dossier (2) d'un siège (1) de véhicule, le siège (1) comprenant une assise (3), solidaire d'une structure (4) du véhicule, et un dossier (2) qui est fixé, en position d'utilisation du siège (1), et par l'intermédiaire d'au moins une première sangle (5), entre l'assise (3) et un ou plusieurs premiers points d'attache hauts à un plafond (8) du véhicule, ladite ou lesdites premières sangles (5) étant réglables en tension et étant, en position d'utilisation du siège (1), tendues de façon à maintenir en position le dossier (2), dispositif (9 ; 24) **caractérisé par le fait qu'**il comprend une structure intermédiaire de suspension (11 ; 26), munie de moyens de liaison à ladite ou auxdites premières sangles (5), et une structure fixe (10 ; 25) qui est adaptée pour être solidaire du plafond (8) du véhicule et forme ledit ou lesdits premiers points d'attache hauts, la structure fixe (10 ; 25) comprenant à cet effet :
- des moyens de retenue (12d ; 31c) pour relier de manière amovible la structure intermédiaire de suspension (11 ; 26) à la structure fixe (10 ; 25) et supporter la structure intermédiaire de suspension (11; 26) en position d'utilisation du siège (1), position dans laquelle la structure intermédiaire de suspension (11 ; 26) a été amenée avec un mouvement vers le plafond (8) de façon à placer la structure intermédiaire de suspension (11; 26) sous tension par la ou les premières sangles (5) ; et
- des moyens de verrouillage (16 ; 33) pour, dans une première position, verrouiller la structure intermédiaire de suspension (11 ; 26) dans la position d'utilisation du siège (1), et pour, dans une seconde position, libérer la structure intermédiaire de suspension (11; 26) d'une manière telle que cette dernière est déplacée à l'opposé du plafond (8) de façon à relâcher la tension exercée par la ou les premières sangles sur la structure intermédiaire de suspension (11; 26) et permettre ainsi à la structure intermédiaire de suspension (11 ; 26) d'être désengagée des moyens de retenue (12d ; 31c), ces derniers étant configurés pour supporter la structure intermédiaire de suspension (11; 26) au cours dudit déplacement à l'opposé du plafond (8),
ce par quoi le dossier (2) peut ainsi être déposé ou reposé sans action sur le réglage en tension de ladite ou desdites premières sangles (5).

2. Dispositif (9 ; 24) selon la revendication 1, pour la dépose/repose rapide d'un dossier (2) d'un siège (1) de véhicule et d'un harnais (6) équipant le siège (1), le harnais (6) comprenant au moins deux sangles d'épaule (6a) coopérant chacune avec une seconde sangle (7) s'étendant entre un point d'attache bas solidaire de la structure (4) du véhicule et, en position d'utilisation du siège (1), un second point d'attache haut au plafond (8) du véhicule, ladite ou lesdites secondes sangles (7) étant réglables en tension et étant, en position d'utilisation du siège (1), tendues de façon à permettre un maintien de l'occupant du siège (1) en appui contre le dossier (2) par les deux sangles d'épaule (6a), dispositif (9 ; 24) **caractérisé par le fait que** la structure intermédiaire de suspension (11 ; 26) est également munie de moyens de liaison auxdites secondes sangles (7).

3. Dispositif (9) selon l'une des revendications 1 ou 2, **caractérisé par le fait que** les moyens de retenue sont formés par des crochets fixes (12d) dont les ouvertures ont des fonds qui suivent un même cylindre fictif et que la structure intermédiaire de suspension (11) comprend au moins une barre cylindrique (15) apte à être reçue dans les crochets (12d) de manière à pouvoir tourner autour de l'axe longitudinal de l'au moins une barre (15), la structure intermédiaire de suspension (11) étant ainsi apte à pivoter vers le haut ou vers le bas autour de l'axe de rotation de l'au moins une barre (15).

4. Dispositif (9) selon la revendication 3, **caractérisé par le fait que** la structure intermédiaire de suspension (11) comprend deux poignées (14) reliées par une barre centrale de liaison (13) et portant chacune des moyens de fixation d'une première sangle et, le cas échant, d'une seconde sangle, et une barre cylindrique (15) apte à être reçue dans l'un des crochets fixes (12d).

5. Dispositif (26) selon l'une des revendications 1 ou 2, **caractérisé par le fait que** la structure fixe (25) comprend un support fixe (30) solidaire du plafond (8) du véhicule, que les moyens de retenue (31c) sont formés par des crochets mobiles (31c) reliées au support fixe (30) de manière à pouvoir pivoter autour d'un axe de pivotement horizontal, les ouvertures des crochets (31c) ayant des fonds qui suivent un même cylindre fictif, et que la structure intermédiaire de suspension (26) comprend au moins une barre cylindrique (27) apte à être reçue dans les crochets (31c), la structure intermédiaire de suspension (26) étant ainsi apte, après engagement de l'au moins une barre (27) dans les crochets (31c), à être déplacée jusqu'à la position d'utilisation du siège (1) par pivotement vers le haut ou vers le bas des crochets mobiles (31c) .

6. Dispositif (9 ; 24) selon l'une des revendications 3 à 5, **caractérisé par le fait que** le centre d'inertie de la structure intermédiaire de suspension (11), le cas échéant de l'ensemble formé par les crochets mobiles (31c) et la structure intermédiaire de suspension (26), lorsque l'au moins une barre (15 ; 27) est engagée dans les crochets (12d ; 31c), est, vis-à-vis de l'axe de pivotement de la structure intermédiaire de suspension (11), le cas échéant de l'ensemble formé par les crochets mobiles (31c) et la structure intermédiaire de suspension (26), décalé côté assise (3) par rapport au plan du dossier (2) dans la position d'utilisation du siège (1).

7. Dispositif (9 ; 24) selon l'une des revendications 1 à 6, **caractérisé par le fait que** les moyens de verrouillage (16 ; 33) comprennent un organe de verrouillage (17 ; 35) mobile entre lesdites première et seconde positions des moyens de verrouillage (16 ; 33) et des moyens (36) de sollicitation élastique de l'organe de verrouillage (17 ; 35) vers la première position, et que la structure intermédiaire de suspension (11 ; 26) porte un organe de coopération (13a ; 34) agencé pour déplacer l'organe de verrouillage (17 ; 35) de ladite première position à ladite seconde position lorsque la structure intermédiaire de suspension (11 ; 26) arrive à la position d'utilisation du siège (1) par un mouvement vers le plafond (8) .

8. Dispositif (9 ; 24) selon la revendication 7, **caractérisé par le fait que** les moyens de verrouillage (16 ; 33) comprennent une poignée de commande de déverrouillage (20 ; 35a) actionnable manuellement pour déplacer l'organe de verrouillage (17 ; 35) de la première position à la seconde position.

9. Dispositif (9) selon l'une des revendications 7 ou 8, prises en dépendance de la revendication 4, **caractérisé par le fait que** l'organe de coopération (13a) consiste en un doigt de verrouillage (13a) s'étendant à partir de la barre centrale de liaison (13) et que la structure fixe (10) présente une échancrure (12f) apte à recevoir le doigt de verrouillage (13a) lorsque la structure intermédiaire de suspension (11) est dans la position d'utilisation du siège (1), l'organe de verrouillage (17) étant un loquet pivotant (17) présentant une surface extérieure en biais (17b) orientée de telle sorte que le doigt de verrouillage (13a) fait pivoter le loquet (17) vers la seconde position lorsqu'il appuie sur la surface en biais (17b) à l'arrivée de la structure intermédiaire de suspension (11) à la position d'utilisation du siège (1).

10. Dispositif (24) selon l'une des revendications 7 ou 8, prise en dépendance de l'une des revendications 5 ou 6, **caractérisé par le fait que** l'organe de verrouillage (35) est formé par un doigt de verrouillage (35) porté, par le support fixe (30), à translation dans une direction parallèle à l'axe de pivotement des crochets mobiles (31c), et que les crochets mobiles (31c) sont reliées d'un seul tenant l'un à l'autre par une partie centrale de liaison (31a) portant une patte (34) inclinée en étant tournée vers le haut et le doigt de verrouillage (35), un trou traversant (34a) étant ménagé dans la patte (34) pour le passage du doigt de verrouillage (35), ladite patte (34) formant l'organe de coopération et son inclinaison étant telle que la patte (34) déplace le doigt de verrouillage (35) en translation vers la seconde position lorsqu'il appuie sur la patte inclinée (34) à l'arrivée de la structure intermédiaire de suspension (11) à la position d'utilisation du siège (1).

11. Ensemble siège pour véhicule, comprenant un siège (1) et des points d'attache du siège (1) à un plafond (8) du véhicule, le siège (1) comprenant une assise (3), solidaire d'une structure (4) du véhicule, et un dossier (2), de préférence souple, qui est fixé, en position d'utilisation du siège (1), et par l'intermédiaire d'au moins une première sangle (5), entre l'assise (3) et un premier point d'attache haut à un plafond (8) du véhicule, le siège étant, de préférence, équipé d'un harnais (6) comprenant au moins deux sangles d'épaule (6a) coopérant chacune avec une seconde sangle (7) s'étendant entre un point d'attache bas solidaire de la structure (4) du véhicule et, en position d'utilisation du siège (1), un second point d'attache haut au plafond (8) du véhicule, ladite ou lesdites premières sangles (5) et le cas échéant ladite ou lesdites secondes sangles (7) étant réglables en tension et étant, en position d'utilisation du siège (1), tendues de façon à respectivement maintenir en position le dossier (2) et permettre un maintien de l'occupant du siège (1) en appui contre le dossier (2) par les deux sangles d'épaule (6a), ensemble siège **caractérisé par le fait qu'**il comprend un dispositif de dépose/repose rapide (9 ; 24) tel que défini à l'une des revendications 1 à 10.

## Patentansprüche

1. Vorrichtung (9; 24), die zur schnellen Entfernung/Ersetzung einer Rückenlehne (2) eines Fahrzeugsitzes (1) geeignet ist, wobei der Sitz (1) eine Sitzfläche (3), die mit einer Struktur (4) des Fahrzeugs fest verbunden ist, und eine Rückenlehne (2) umfasst, die in Benutzungsposition des Sitzes (1) und mit Hilfe von mindestens einem ersten Gurt (5) zwischen der Sitzfläche (3) und einem oder mehreren ersten oberen Befestigungspunkten an einer Decke (8) des Fahrzeugs befestigt ist, wobei der oder die ersten Gurte (5) spannungsmäßig einstellbar sind und in Benutzungsposition des Sitzes (1) derart gespannt sind, dass die Rückenlehne (2) in Position gehalten wird, wobei die Vorrichtung (9; 24) **dadurch gekennzeichnet ist, dass** sie eine vermittelnde Aufhängungsstruktur (11; 26) umfasst, die mit Verbindungsmitteln mit dem oder den ersten Gurten (5) ausgestattet ist, und eine feste Struktur (10; 25), die zur festen Verbindung mit der Decke (8) des Fahrzeugs geeignet ist und den oder die ersten oberen Befestigungspunkte bildet, wobei die feste Struktur (10; 25) dafür umfasst:
- Haltemittel (12d; 31c), um die vermittelnde Aufhängungsstruktur (11; 26) lösbar mit der festen Struktur (10; 25) zu verbinden und die vermittelnde Aufhängungsstruktur (11; 26) in Benutzungsposition des Sitzes (1) zu stützen, einer Position, in welcher die vermittelnde Aufhängungsstruktur (11; 26) mit einer Bewegung in Richtung Decke (8) derart geführt wurde, dass die vermittelnde Aufhängungsstruktur (11; 26) von dem oder den ersten Gurten (5) in Spannung versetzt wird; und
- Verriegelungsmittel (16; 33), um in einer ersten Position die vermittelnde Aufhängungsstruktur (11; 26) in der Benutzungsposition des Sitzes (1) zu verriegeln und um in einer zweiten Position die vermittelnde Aufhängungsstruktur (11; 26) derart freizugeben, dass diese entgegengesetzt zur Decke (8) derart verlagert wird, dass die von dem oder den ersten Gurten auf die vermittelnde Aufhängungsstruktur (11; 26) ausgeübte Spannung gelockert wird und somit der vermittelnden Aufhängungsstruktur (11; 26) gestattet wird, von den Haltemitteln (12d; 31c) befreit zu werden, wobei diese konfiguriert sind, um die vermittelnde Aufhängungsstruktur (11; 26) während der Verlagerung entgegengesetzt zur Decke (8) zu stützen,
so dass dadurch die Rückenlehne (2) ohne Einwirkung auf die Einstellung der Spannung des oder der ersten Gurte (5) entfernbar oder ersetzbar ist.

2. Vorrichtung (9; 24) nach Anspruch 1 für die schnelle Entfernung/Ersetzung einer Rückenlehne (2) eines Fahrzeugsitzes (1) und eines Geschirrs (6), das den Sitz (1) ausrüstet, wobei das Geschirr (6) mindestens zwei Schultergurte (6a) umfasst, die jeweils mit einem zweiten Gurt (7) zusammenwirken, der sich zwischen einem unteren Befestigungspunkt erstreckt, der mit der Struktur (4) des Fahrzeugs fest verbunden ist und in Benutzungsposition des Sitzes (1) einem zweiten oberen Befestigungspunkt an der Decke (8) des Fahrzeugs, wobei der oder die zweiten Gurte (7) spannungsmäßig einstellbar sind und in Benutzungsposition des Sitzes (1) derart gespannt sind, dass ein Halten des Benutzers des Sitzes (1) abgestützt an der Rückenlehne (2) von den zwei Schultergurten (6a) gestattet wird, wobei die Vorrichtung (9; 24) **dadurch gekennzeichnet ist, dass** die vermittelnde Aufhängungsstruktur (11; 26) ebenfalls mit Verbindungsmitteln mit den zweiten Gurten (7) ausgestattet ist.

3. Vorrichtung (9) nach einem der Ansprüche 1 oder 2 , **dadurch gekennzeichnet, dass** die Haltemittel von festen Haken (12d) gebildet sind, deren Öffnungen Böden haben, die demselben fiktiven Zylinder folgen und dass die vermittelnde Aufhängungsstruktur (11) mindestens eine zylindrische Stange (15) umfasst, die imstande ist, in den Haken (12d) derart aufgenommen zu sein, dass sie um die Längsachse der mindestens einen Stange (15) drehbar ist, wobei die vermittelnde Aufhängungsstruktur (11) somit imstande ist, um die Rotationsachse der mindestens einen Stange (15) nach oben oder nach unten zu schwenken.

4. Vorrichtung (9) nach Anspruch 3, **dadurch gekennzeichnet, dass** die vermittelnde Aufhängungsstruktur (11) zwei Griffe (14) umfasst, die durch eine zentrale Verbindungsstange (13) verbunden sind und jeweils Befestigungsmittel eines ersten Gurts tragen und gegebenenfalls eines zweiten Gurts, und eine zylindrische Stange (15), die imstande ist, in einem der festen Haken (12d) aufgenommen zu sein.

5. Vorrichtung (26) nach einem der Ansprüche 1 oder 2, **dadurch gekennzeichnet, dass** die feste Struktur (25) einen festen Halter (30) umfasst, der mit der Decke (8) des Fahrzeugs fest verbunden ist, dass die Haltemittel (31c) von beweglichen Haken (31c) gebildet sind, die mit dem festen Halter (30) derart verbunden sind, dass sie um eine horizontale Schwenkachse schwenken können, wobei die Öffnungen der Haken (31c) Böden haben, die demselben fiktiven Zylinder folgen, und dass die vermittelnde Aufhängungsstruktur (26) mindestens eine zylindrische Stange (27) umfasst, die imstande ist, in den Haken (31c) aufgenommen zu sein, wobei die vermittelnde Aufhängungsstruktur (26) somit imstande ist, nach Einsetzen der mindestens einen Stange (27) in die Haken (31c), bis zu der Benutzungsposition des Sitzes (1) durch Schwenken nach oben oder nach unten der beweglichen Haken (31c) verlagert zu werden.

6. Vorrichtung (9; 24) nach einem der Ansprüche 3 bis 5, **dadurch gekennzeichnet, dass** das Trägheitszentrum der vermittelnden Aufhängungsstruktur (11), gegebenenfalls der Einheit, gebildet von den beweglichen Haken (31c) und der vermittelnden Aufhängungsstruktur (26), wenn mindestens eine Stange (15; 27) in die Haken (12d; 31c) eingesetzt ist, gegenüber der Schwenkachse der vermittelnden Aufhängungsstruktur (11), gegebenenfalls der Einheit, gebildet von den beweglichen Haken (31c) und der vermittelnden Aufhängungsstruktur (26), zur Seite der Sitzfläche (3) in Bezug auf die Ebene der Rückenlehne (2) in der Benutzungsposition des Sitzes (1) versetzt ist.

7. Vorrichtung (9; 24) nach einem der Ansprüche 1 bis 6, **dadurch gekennzeichnet, dass** die Verriegelungsmittel (16; 33) ein Verriegelungsorgan (17; 35) umfassen, das zwischen der ersten und zweiten Position der Verriegelungsmittel (16; 33) beweglich ist, und elastische Beanspruchungsmittel (36) des Verriegelungsorgans (17; 35) in die erste Position, und dass die vermittelnde Aufhängungsstruktur (11; 26) ein Kooperationsorgan (13a; 34) trägt, das eingerichtet ist, um das Verriegelungsorgan (17; 35) aus der ersten Position in die zweite Position zu verlagern, wenn die vermittelnde Aufhängungsstruktur (11; 26) in der Benutzungsposition des Sitzes (1) durch eine Bewegung in Richtung Decke (8) ankommt.

8. Vorrichtung (9; 24) nach Anspruch 7, **dadurch gekennzeichnet, dass** die Verriegelungsmittel (16; 33) einen Entriegelungssteuergriff (20; 35a) umfassen, der manuell betätigbar ist, um das Verriegelungsorgan (17; 35) aus der ersten Position in die zweite Position zu verlagern.

9. Vorrichtung (9) nach einem der Ansprüche 7 oder 8, herangezogen in Abhängigkeit von Anspruch 4, **dadurch gekennzeichnet, dass** das Kooperationsorgan (13a) aus einem Verriegelungsfinger (13a) besteht, der sich ab der zentralen Verbindungsstange (13) erstreckt und dass die feste Struktur (10) eine Aussparung (12f) aufweist, die imstande ist, den Verriegelungsfinger (13a) aufzunehmen, wenn die vermittelnde Aufhängungsstruktur (11) in der Benutzungsposition des Sitzes (1) ist, wobei das Verriegelungsorgan (17) ein schwenkender Riegel (17) ist, der eine schräge Außenfläche (17b) aufweist, die derart ausgerichtet ist, dass der Verriegelungsfinger (13a) den Riegel (17) in die zweite Position schwenkt, wenn er auf die schräge Fläche (17b) bei Ankunft der vermittelnden Aufhängungsstruktur (11) in der Benutzungsposition des Sitzes (1) drückt.

10. Vorrichtung (24) nach einem der Ansprüche 7 oder 8, herangezogen in Abhängigkeit von einem der Ansprüche 5 oder 6, **dadurch gekennzeichnet, dass** das Verriegelungsorgan (35) von einem Verriegelungsfinger (35) gebildet ist, der von dem festen Halter (30) translatorisch in einer Richtung parallel zur Schwenkachse der beweglichen Haken (31c) getragen wird, und dass die beweglichen Haken (31c) aneinander zusammenhängend durch einen zentralen Verbindungsteil (31a) verbunden sind, der einen Fuß (34) trägt, der geneigt ist, indem er nach oben gedreht ist, und den Verriegelungsfinger (35), wobei eine Durchgangsöffnung (34a) in den Fuß (34) für den Durchgang des Verriegelungsfingers (35) eingearbeitet ist, wobei der Fuß (34) das Kooperationsorgan bildet und seine Neigung derart ist, dass der Fuß (34) den Verriegelungsfinger (35) translatorisch in die zweiten Position verschiebt, wenn er bei Ankunft der vermittelnden Aufhängungsstruktur (11) in der Benutzungsposition des Sitzes (1) auf den geneigten Fuß (34) drückt.

11. Sitzeinheit für Fahrzeug, umfassend einen Sitz (1) und Befestigungspunkte des Sitzes (1) an einer Decke (8) des Fahrzeugs, wobei der Sitz (1) eine Sitzfläche (3) umfasst, die mit einer Struktur (4) des Fahrzeugs fest verbunden ist, und eine vorzugsweise elastische Rückenlehne (2), die in Benutzungsposition des Sitzes (1) und mit Hilfe von mindestens einem ersten Gurt (5) zwischen der Sitzfläche (3) und einem ersten oberen Befestigungspunkt an einer Decke (8) des Fahrzeugs befestigt ist, wobei der Sitz vorzugsweise mit einem Geschirr (6) ausgestattet ist, umfassend mindestens zwei Schultergurte (6a), die jeweils mit einem zweiten Gurt (7) zusammenwirken, der sich zwischen einem unteren Befestigungspunkt, der mit der Struktur (4) des Fahrzeugs fest verbunden ist und in Benutzungsposition des Sitz (1) einem zweiten oberen Befestigungspunkt an der Decke (8) des Fahrzeugs erstreckt, wobei der oder die ersten Gurte (5) und gegebenenfalls der oder die zweiten Gurte (7) spannungsmäßig einstellbar sind und in Benutzungsposition des Sitzes (1) derart gespannt sind, dass jeweils die Rückenlehne (2) in Position gehalten wird und ein Halten des Benutzers des Sitzes (1) abgestützt an der Rückenlehne (2) von den zwei Schultergurten (6a) gestattet wird, wobei die Sitzeinheit **dadurch gekennzeichnet ist, dass** sie eine Vorrichtung zur schnellen Entfernung/Ersetzung (9; 24) nach einem der Ansprüche 1 bis 10 umfasst.

## Claims

1. A device (9; 24) adapted for rapid removal/reinstallation of a backrest (2) of a vehicle seat (1), the seat (1) comprising a seating part (3), integral with a structure (4) of the vehicle, and a backrest (2) which is attached, in the use position of the seat (1), and via at least one first strap (5), between the seating part (3) and one or more first high attachment points to a ceiling (8) of the vehicle, said first strap(s) (5) being adjustable in tension and being, in the use position of the seat (1), tightened so as to maintain in position the backrest (2), the device (9; 24) being **characterised in that** it comprises a hanging intermediary structure (11; 26), provided with means for connecting to said first strap(s) (5), and a fixed structure (10; 25) which is adapted to be integral with the ceiling (8) of the vehicle and forms said first high attachment point(s), the fixed structure (10; 25) comprising for this purpose:
- retaining means (12d; 31c) for removably connecting the hanging intermediary structure (11; 26) to the fixed structure (10; 25) and for supporting the hanging intermediary structure (11; 26) in the use position of the seat (1), position in which the hanging intermediary structure (11; 26) has been brought with a movement towards the ceiling (8) so as to put under tension the hanging intermediary structure (11; 26) thanks to the tension of the first strap(s) (5); and
- locking means (16; 33) for, in a first position, locking the hanging intermediary structure (11; 26) in the use position of the seat (1) and for, in a second position, unlocking the hanging intermediary structure (11; 26) such that the latter is moved away from the ceiling (8) so as to release the tension applied by the first strap(s) on the hanging intermediary structure (11; 26) and thus allow the hanging intermediary structure (11; 26) to be disengaged from the retaining means (12d; 31c), the latter being configured to support the hanging intermediary structure (11; 26) during said movement away from the ceiling (8),
whereby the backrest (2) can thus be removed or reinstalled without any action on the tension setting of said first strap (s) (5).

2. The device (9; 24) according to claim 1, intended to a rapid removal/reinstallation of a backrest (2) of a vehicle seat (1) and a harness (6) provided to the seat (1), the harness (6) comprising at least two shoulder straps (6a), each cooperating with a second strap (7) extending between a low attachment point integral with the structure (4) of the vehicle and, in the use position of the seat (1), a second high attachment point to the ceiling (8) of the vehicle, said second strap(s) (7) being adjustable in tension and being, in the use position of the seat (1), tightened so as to allow to maintain the occupant of the seat (1) against the backrest (2) by both shoulder straps (6a), the device (9; 24) being **characterised in that** the hanging intermediary structure (11; 26) is also provided with means for connecting to said second straps (7) .

3. The device according to one of claims 1 or 2, **characterised in that** the retaining means are formed by fixed hooks (12d) having openings which have bottoms which follow a same imaginary cylinder, and **in that** the hanging intermediary structure (11) has at least one cylindrical bar (15) able to be received in the hooks (12d) so as to be rotatable around the longitudinal axis of the at least one bar (15), the hanging intermediary structure (11) thus being able to pivot upwards or downwards around the rotation axis of the at least one bar (15).

4. The device (9) according to claim 3, **characterised in that** the hanging intermediary structure (11) comprises two handles (14) connected by a connecting central bar (13) and each handle carrying means for attaching a first strap and, if applicable, a second strap, and a cylindrical bar (15) able to be received in one of the fixed hooks (12d).

5. The device (26) according to one of claims 1 or 2, **characterised in that** the fixed structure (25) has a fixed support (30) integral with the ceiling (8) of the vehicle, **in that** the retaining means (31c) are formed by movable hooks (31c) connected to the fixed support (30) so as to be able to pivot around a horizontal pivot axis, the openings of the hooks (31c) having bottoms which follow a same imaginary cylinder, and **in that** the hanging intermediary structure (26) has at least one cylindrical bar (27) able to be received in the hooks (31c), the hanging intermediary structure (26) thus being able, after engaging the at least one bar (27) in the hooks (31c), to be moved to the use position of the seat (1) by pivoting upwards or downwards the movable hooks (31c).

6. The device (9; 24) according to one of claims 3 to 5, **characterised in that** the center of inertia of the hanging intermediary structure (11), if applicable the assembly formed by the movable hooks (31c) and the hanging intermediary structure (26), when the at least one bar (15; 27) is engaged in the hooks (12d; 31c), is, with respect to the pivot axis of the hanging intermediary structure (11), if applicable of the assembly formed by the movable hooks (31c) and the hanging intermediary structure (26), offset on the seating part (3) side with respect to the plane of the backrest (2) in the use position of the seat (1).

7. The device (9; 24) according to one of claims 1 to 6, **characterised in that** the locking means (16; 33) comprise a locking member (17; 35) movable between said first and second positions of the locking means (16; 33) and means (36) for elastically biasing the locking member (17; 35) towards the first position, and **in that** the hanging intermediary structure (11; 26) carries a cooperating member (13a; 34) arranged to move the locking member (17; 35) from said first position to said second position when the hanging intermediary structure (11; 26) reaches the use position of the seat (1) by a movement towards the ceiling (8).

8. The device according to claim 7, **characterised in that** the locking means (16; 33) comprise an unlocking control handle (20; 35a) manually operable to move the locking member (17; 35) from the first position to the second position.

9. The device (9) according to one of claims 7 or 8, when dependent on claim 4, **characterised in that** the cooperating member (13a) consists in a locking finger (13a) extending from the connecting central bar (13), and **in that** the fixed structure (10) has a notch (12f) able to receive the locking finger (13a) when the hanging intermediary structure (11) is in the use position of the seat (1), the locking member (17) being a pivoting latch (17) having an oblique outer surface (17b) oriented such that the locking finger (13a) pivots the latch (17) to the second position when it presses the oblique surface (17b) when the hanging intermediary structure (11) reaches the use position of the seat (1).

10. The device according to one of claims 7 or 8, when dependent on one of claims 5 or 6, **characterised in that** the locking member (35) is formed by a locking finger (35) carried, by the fixed support (30), so as to be able to translate in a direction parallel to the pivot axis of the movable hooks (31c), and **in that** the movable hooks (31c) are integrally connected to each other by a connecting central part (31a) carrying a leg (34) which is sloped while being oriented upwards and towards the locking finger (35), a through hole (34a) being provided in the leg (34) for letting the locking finger (35) pass, said leg (34) forming the cooperating member and its slope being such that the leg (34) moves the locking finger (35) in translation towards the second position when it presses the sloped leg (34) when the hanging intermediary structure (11) reaches the use position of the seat (1).

11. A seat assembly for a vehicle, comprising a seat (1) and attachment points for attaching the seat (1) to a ceiling (8) of the vehicle, the seat (1) comprising a seating part (3), integral with a structure (4) of the vehicle, and a backrest (2), preferably flexible, which is attached, in the use position of the seat (1), and via at least one first strap (5), between the seating part (3) and a first high attachment point to a ceiling (8) of the vehicle, the seat being, preferably, provided with a harness (6) comprising at least two shoulder straps (6a), each cooperating with a second strap (7) extending between a low attachment point integral with the structure (4) of the vehicle and, in the use position of the seat (1), a second high attachment point to the ceiling (8) of the vehicle, said first strap(s) (5) and, if applicable, said second strap(s) (7), being adjustable in tension and being, in the use position of the seat (1), tightened so as to respectively maintain in position the backrest (2) and allow to maintain the occupant of the seat (1) against the backrest (2) by both shoulder straps (6a), the seat assembly being **characterised in that** it comprises a device for rapid removal/reinstallation (9; 24) as defined in one of claims 1 to 10.
